# EUROPEAN PATENT APPLICATION

(11) **EP 4 697 393 A1**
(43) Date of publication of application: **18.02.2026**
(21) Application number: 25195259.4
(22) Date of filing: 11.08.2025
(51) Int. Cl.: H01M 4/04, H01M 4/13, H01M 4/131, H01M 4/133, H01M 4/139, H01M 4/62, H01M 4/66, H01M 10/0525, H01M 10/058, H01M 50/593

(54) **ELECTRODE FOR RECHARGEABLE LITHIUM BATTERIES AND RECHARGEABLE LITHIUM BATTERIES INCLUDING THE SAME**

(30) Priority: 13.08.2024 KR 20240108180
(71) Applicant: SAMSUNG SDI CO., LTD., Yongin-si, Gyeonggi-do 17084 (KR)
(72) Inventor: LEE, Hyunjin, Yongin-si, Gyeonggi-do 17084 (KR)
(74) Representative: Maiwald GmbH

(57) **Abstract**

Disclosed are an electrode for a rechargeable lithium battery, and a rechargeable lithium battery including the electrode. The electrode for a rechargeable lithium battery includes an electrode current collector, an electrode active material layer on the electrode current collector, and a coating layer at an edge of the electrode active material layer. The coating layer includes an impact modifier.

## Description

### BACKGROUND

### 1. Field

Electrodes for rechargeable lithium batteries, and rechargeable lithium batteries including the electrodes are disclosed.

### 2. Description of the Related Art

Rechargeable lithium batteries are widely used as a driving power source for mobile information terminals such as, e.g., smart phones and laptops, because rechargeable lithium batteries are compact enough to carry while providing high energy density. Rechargeable lithium batteries with high safety and high capacity as a driving power source for hybrid vehicles or electric vehicles, or as a power storage power source, may be advantageous.

An electrode plate for the rechargeable lithium batteries is typically manufactured through processes including mixing a slurry containing an electrode active material, coating the slurry on an electrode current collector to form an electrode active material layer, drying, pressing, and slitting the electrode, wrapping the electrode in a reel shape and storing the electrode, and notching the electrode.

During the notching process, as the electrode active material layer of the electrode plate is cut off, cracking and detachment may occur, and during a subsequent stacking process of the electrode active material layer, the cracking and detachment may additionally occur due to physical collision of the electrode active material layer of the electrode plate and a stack equipment. The cracking of the electrode active material layer may reduce processability.

Accordingly, an electrode plate substantially having neither cracking nor detachment of an electrode active material layer of the electrode plate after the notching process of the electrode plate may be advantageous.

### SUMMARY

Some example embodiments include an electrode for a rechargeable lithium battery, and a rechargeable lithium battery including the electrode, which can reduce or suppress cracking and detachment of the electrode active material layer of an electrode plate, even after a notching process of the electrode plate, by including a coating layer including an impact modifier at an edge of the electrode active material layer.

In some example embodiments, an electrode for a rechargeable lithium battery includes an electrode current collector, an electrode active material layer on the electrode current collector, and a coating layer at an edge of the electrode active material layer, wherein the coating layer includes an impact modifier.

In some example embodiments, a rechargeable lithium battery includes a positive electrode, a negative electrode, and an electrolyte, wherein at least one of the positive electrode and the negative electrode is the aforementioned electrode.

According to some example embodiments, an electrode for a rechargeable lithium battery includes a coating layer including an impact modifier at an edge of an electrode active material layer, thereby reducing or suppressing cracking and detachment of the electrode active material layer of the electrode plate, even after a notching process of the electrode plate.

### BRIEF DESCRIPTION OF THE DRAWINGS

FIG. 1 is a schematic view illustrating a conventional electrode after a notching process during the manufacturing process of an electrode of a rechargeable lithium battery.
FIG. 2 is a schematic view illustrating an electrode according to some example embodiments after a notching process in the process of manufacturing an electrode plate of a rechargeable lithium battery.
FIGS. 3 to 6 are schematic views illustrating a rechargeable lithium battery according to some example embodiments.
FIGS. 7 and 8 are electron microscope photographs of the end portion of the electrode according to Example 1.
FIGS. 9 and 10 are photographs taken using an electron microscope of the end portion of the electrode according to Comparative Example 1.

### DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" indicates a mixture, a laminate, a composite, a copolymer, an alloy, a blend, a reaction product, and the like, of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and the like, may be exaggerated for clarity and like reference numerals designate like elements throughout the specification. It is understood that when an element such as a layer, film, region, or substrate is referred to as being "on" another element, the element can be "directly on" the other element, or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may indicate the diameter (D₅₀) of particles having a cumulative volume of 50 volume% in the particle size distribution. As used herein, when a definition is not otherwise provided, the average particle diameter indicates a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrode

In some example embodiments, an electrode for a rechargeable lithium battery includes an electrode current collector, an electrode active material layer on the electrode current collector, and a coating layer at an edge of the electrode active material layer, wherein the coating layer includes an impact modifier.

The electrode plate for a rechargeable lithium battery is manufactured through a process that includes mixing a slurry, coating the slurry on an electrode current collector, subsequently drying, pressing, and slitting the electrode, wrapping the electrode in a reel shape and storing the electrode, and notching the electrode. During the notching process, the electrode plates are cut into unit electrode plate with a desired or predetermined size to stack the unit electrode plates in the subsequent stack process thereof. This conventional electrode plate-manufacturing process may present a challenge because a binder in the slurry is less present on the interface, while the binder in the slurry is more present toward the surface during the drying, the active material layer is detached around the edges during the notching process.

In order to address the above challenge, an impact modifier may be added to the slurry. However, when the impact modifier is added to the electrode active material layer, or another coating layer including the impact modifier is formed on the electrode active material layer, the mechanical strength of the electrode active material layer may be improved, reducing or preventing the cracking and detachment, but there may be another challenge because a content of the active material is relatively reduced, deteriorating capacity and energy density.

Accordingly, in some example embodiments, the coating layer including the impact modifier is formed at the edges of the electrode active material layer to reduce or suppress the cracking and detachment of the edges of the electrode plate after the notching and stacking processes.

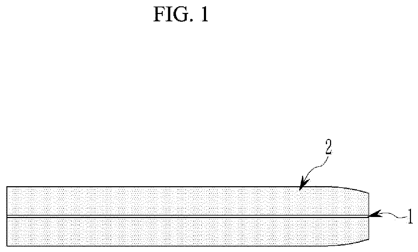

FIG. 1 is a schematic view illustrating a conventional electrode after a notching process during the manufacturing process of an electrode of a rechargeable lithium battery. In FIG. 1, the electrode may include an electrode current collector 1 and an electrode active material layer 2 on the electrode current collector 1, and the electrode may experience detachment, generating a notch 1 near the edge of the electrode active material layer 2 due to the notching process.

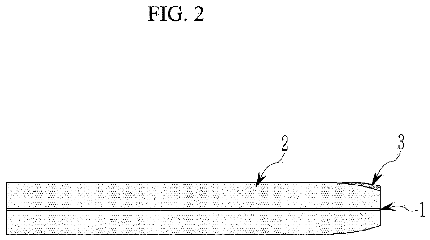

FIG. 2 is a schematic view illustrating an electrode according to some example embodiments after a notching process in the process of manufacturing an electrode plate of a rechargeable lithium battery. In FIG. 2, the electrode may include an electrode current collector 1, an electrode active material layer 2 on the electrode current collector 1, and a coating layer 3 at the edge of the electrode active material layer 2. By including the coating layer 3 at the edge of the electrode active material layer 2 in FIG. 2, the electrode according to some example embodiments can reduce or suppress the occurrence of cracks and detachment at the edge of the electrode plate even after the notching process generates a notch 1.

Hereinafter, the components that constitutes the electrode are described in detail.

### Coating Layer

A coating layer according to some example embodiments is located at an edge of one surface of an electrode active material layer, and includes an impact modifier. The edge of one surface of the electrode active material layer refers to a terminal end of one surface of the electrode active material layer disposed on an electrode current collector. For example, the edge of one surface of the electrode active material layer may be a region having a width of about 10 mm or less from one terminal end of one surface of the electrode active material layer toward a center direction of the electrode active material layer, for example, a width in a range of from about 1 mm to about 9 mm or about 2 mm to about 8 mm.

An area of the coating layer at the edge of the electrode active material layer may be about 10% or less based on a total area of one surface of the electrode active material layer to be described below, for example, less than or equal to about 9%, less than or equal to about 8%, or less than or equal to about 7% and greater than or equal to about 1%, greater than or equal to about 2%, greater than or equal to about 3%, or greater than or equal to about 4%. Herein, the area of the coating layer and the area of the electrode active material layer refer to an area visible when looking down at the electrode from above. When the area of the coating layer at the edges of the electrode active material layer to the total area of one surface of the electrode active material layer satisfies the above ranges, the cracking and detachment may not only be reduced or prevented, but also deterioration of capacity and energy density may be reduced or prevented.

The area of the electrode active material layer may be the same as or smaller than the area of one surface of the electrode current collector and for example, a ratio of the area of the electrode active material layer to the area of the electrode current collector may be in a range of from about 0.7 to about 0.99, or about 0.8 to about 0.9. Accordingly, a portion of the surface of the electrode current collector may not be covered with the electrode active material layer and may be exposed, which is a surface portion of the electrode current collector where the electrode active material layer is not coated but exposed, that is, an uncoated portion.

The coating layer may not only be present at the edges of one surface of the electrode active material layer, but also on the surface portion not coated with the electrode active material layer on the electrode current collector, that is, the uncoated portion.

An area of the coating layer on the uncoated portion to a total area of the coating layer entire area may be in a range of from about 0% to about 50%. For example, the area of the coating layer on the uncoated portion to the total area of the coating layer entire area may be about 0% to about 40% or about 0% to about 30%. When the area of the coating layer on the uncoated portion to the total area of the coating layer satisfies the above ranges, the cracking and detachment may not only be reduced or prevented, but also the deterioration of capacity and energy density may be reduced or prevented. In addition, because the smaller area of the coating layer on the uncoated portion the better, the area may have no lower limitation.

The impact modifier includes at least one of a methacrylate-butadiene-styrene copolymer (MBS), an acrylic impact modifier (AIM), an acrylonitrile-butadiene-styrene copolymer (ABS), a methacrylate-acrylonitrile-butadiene-styrene copolymer (MABS), an ethylene-vinyl acetate copolymer (EVA), a chlorinated polyethylene (CPE, chlorinated PE), an acrylic-grafted chlorinated polyethylene, an acrylic-grafted polyvinyl chloride (acrylic-grafted PVC), or a combination thereof.

As the acrylic impact modifier (AIM), any known acrylic impact modifier, excluding those described above, may be used without limitation. Examples include an acrylic core-shell impact modifier having a shell composed of, or including, polymethyl methacrylate (PMMA) or other acrylate, and a core composed of or including rubber, and a combination of silicone rubber and acrylate.

The impact modifier may be in the form of particles, and the average particle diameter (D₅₀) of the particles may be in a range of from about 100 nm to about 500 nm. For example, the average particle diameter (D₅₀) of the particles may be about 150 nm to about 400 nm, or about 150 nm to about 300 nm. When the average particle diameter (D₅₀) of the impact modifier satisfies the above range, cracks and detachment at the edge of the electrode active material layer can be reduced or suppressed even after the notching and stacking processes, and thus the processability can be improved. The average particle diameter (D₅₀) of the impact modifier may be measured using a LS 13320 Laser Diffraction Particle Size Analyzer from Beckman Counter according to the Laser Scattering Method of ISO-13320-1.

The shape of the particles of the impact modifier may be, e.g., irregular, spherical, elliptical, and the like.

The impact modifier may be included in a content in a range of from about 20 wt% to about 80 wt% based on 100 wt% of the coating layer. For example, the content of the impact modifier may be about 25 wt% to about 75 wt%, about 30 wt% to about 70 wt%, about 35 wt% to about 65 wt%, or about 40 wt% to about 60 wt%. When the content of the impact modifier satisfies the above range, cracks and detachment at the edge of the electrode active material layer may be reduced or suppressed during the notching and stacking processes, thereby improving the processability of the electrode plate.

The coating layer may further include a binder together with an impact modifier.

The binder is configured to attach impact modifier particles to each other, and to attach the coating layer to the electrode current collector and the electrode active material layer. The type of binder may not be specifically limited as long as it is a known binder included in the electrode active material layer. For example, the binder may include a polymer including at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, nylon, or a combination thereof.

The binder may be included in an amount in a range of from about 0.1 wt% to about 20 wt%, for example, about 1 wt% to about 18 wt%, about 3 wt% to about 15 wt%, or about 5 wt% to about 12 wt% based on 100 wt% of the coating layer. When the content of the binder satisfies the above range, the adhesive strength to the electrode active material layer is desired or improved without deteriorating cell performance, and cracks and detachment at the interface may be reduced or suppressed.

The coating layer may optionally further include an electrode active material, a conductive material, or a combination thereof.

The electrode active material may be or include a positive electrode active material or a negative electrode active material, as further described below, depending on the type of the electrode active material layer. For example, when the electrode active material layer is a positive electrode active material layer including a positive electrode active material, the electrode active material included in the coating layer may be or include a positive electrode active material, and when the electrode active material layer is a negative electrode active material layer including a negative electrode active material, the electrode active material included in the coating layer may be or include a negative electrode active material. Meanwhile, the electrode active material in the electrode active material layer and the electrode active material in the coating layer may be or include a positive electrode active material or a negative electrode active material, but the specific types thereof may be the same or different. In some example embodiments, the electrode active material layer is or includes a negative electrode active material layer including a negative electrode active material, and the electrode active material included in the coating layer also is or includes a negative electrode active material, and the electrode active material in the electrode active material layer and the electrode active material in the coating layer are both negative electrode active materials, and may be the same or substantially the same type as artificial graphite.

The electrode active material may be included in an amount in a range of from about 10 wt% to about 70 wt%, for example, about 15 wt% to about 65 wt%, about 20 wt% to about 60 wt%, about 25 wt% to about 55 wt%, or about 30 wt% to about 50 wt% based on 100 wt% of the coating layer. The electrode active material may contribute to an increase in capacity when included within the above range in the coating layer.

The conductive material is as described below. By including a conductive material in the coating layer, the resistance of the electrode plate can be reduced.

The coating layer can be adjusted to a desired thickness as needed. For example, a thickness of the coating layer may be in a range of from about 1 µm to about 50 µm, for example about 2 µm to about 40 µm, about 6 µm to about 30 µm, or about 8 µm to about 20 µm.

The coating layer may be formed simultaneously or contemporaneously by coating the coating layer slurry together with the electrode slurry described below on the electrode current collector, drying and compressing, or the electrode slurry may be first coated on the electrode current collector, dried, to form an electrode active material layer, and the coating layer slurry may be coated, dried and compressed to form the coating layer.

The electrode slurry may be prepared according to a known method, and the coating layer slurry may be prepared by dispersing the aforementioned impact modifier and binder, and optionally an electrode active material, a conductive material, or a combination thereof, in a solvent. Any solvent included in the preparation of electrode slurry may be included without limitation.

### Electrode Current Collector

The electrode current collector is not particularly limited as long as the electrode current collector is conductive and does not cause a chemical change in the rechargeable lithium battery.

The electrode current collector may vary depending on the type of electrode. For example, when the electrode is a positive electrode, the electrode current collector may be or include a positive electrode current collector, for example, an aluminum (Al) thin film, and when the electrode is a negative electrode, the electrode current collector may be or include a negative electrode current collector, for example, a copper (Cu) thin film.

### Electrode Active Material Layer

The electrode active material layer may include an electrode active material, and the electrode active material may vary depending on the type of electrode.

For example, when the electrode is a positive electrode, the electrode active material layer may be or include a positive electrode active material layer, and the electrode active material may be or include a positive electrode active material.

The positive electrode active material may be or include a compound capable of intercalating and deintercalating lithium (lithiated intercalation compound). For example, one or more types of composite oxides of a metal such as or including at least one of cobalt, manganese, nickel, and a combination thereof and lithium may be included.

The composite oxide may be or include a lithium transition metal composite oxide, and examples thereof may include at least one of lithium nickel-based oxide, lithium cobalt-based oxide, lithium manganese-based oxide, a lithium iron phosphate-based compound, cobalt-free lithium nickel-manganese-based oxide, lithium-manganese rich composite oxide, or a combination thereof.

As an example, a compound represented by any of the following chemical formulas may be included. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0< α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1, LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001 ≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄(0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may include a lithium nickel-based composite oxide represented by Chemical Formula 6, a lithium cobalt-based composite oxide represented by Chemical Formula 7, or a combination thereof.

Chemical Formula 6: Liₐ₆Niₓ₆M⁶_{y6}M⁷_{z6}O_{2-b6}X_{b6}

In Chemical Formula 6, 0.9≤a6≤1.8, 0.3≤x6≤1, 0≤y6≤0.7, 0≤z6≤0.7, 0.9≤x6+y6+z6≤1.1, and 0≤b6≤0.1, M⁶ and M⁷ each are or include independently one or more of Al, B, Ba, Ca, Ce, Co, Cr, Cu, Fe, Mg, Mn, Mo, Nb, Si, Sn, Sr, Ti, V, W, Y, Zn, and Zr, and X is or includes one or more of F, P, and S.

In Chemical Formula 6, 0.6≤x6≤1, 0≤y6≤0.4, and 0≤z6≤0.4, or 0.8≤x6≤1, 0≤y6≤0.2, and 0≤z6≤0.2.

Chemical Formula 7: Liₐ₇Coₓ₇M⁸_{y7}O_{2-b7}X_{b7}

In Chemical Formula 7, 0.9≤a7≤1.8, 0.7≤x7≤1, 0≤y7≤0.3, 0.9≤x7+y7≤1.1, and 0≤b7≤0.1, M⁸ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is one or more of F, P, and S.

In Chemical Formula 7, 0.8≤x7≤1, and 0≤y7≤0.2, or 0.7≤x7≤0.9, and 0≤y7≤0.2.

As an example, the positive electrode active material may be or include a high nickel-based positive electrode active material having a nickel content that is greater than or equal to about 80 mol%, greater than or equal to about 85 mol%, greater than or equal to about 90 mol%, greater than or equal to about 91 mol%, greater than or equal to about 94 mol%, or greater than or equal to 99 mol% based on 100 mol% of a metal excluding lithium in the lithium transition metal composite oxide. The high nickel-based positive electrode active material may exhibit high capacity, and may be applicable to a high-capacity, high-density rechargeable lithium battery.

As another example, the positive electrode active material may include a lithium cobalt-based composite oxide, in which case desired or improved capacity and cycle-life characteristics can be achieved in a high voltage range.

A content of the positive electrode active material may be in a range of from about 60 wt% to about 99.9 wt%, about 70 wt% to about 99.8 wt%, about 80 wt% to about 99 wt%, about 90 wt% to about 99.8 wt%, or about 94 wt% to about 99 wt%, based on 100 wt% of the positive electrode active material layer.

The positive electrode active material layer may optionally further include a binder, a conductive material, or a combination thereof, together with the positive electrode active material.

The binder is configured to attach the positive electrode active materials to each other, and also to attach the positive electrode active materials to the electrode current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the conductive material causes a chemical change in the battery. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

In the positive electrode active material layer, a content of the binder may be in a range of from about 0.1 wt% to about 5 wt%, or about 0.5 wt% to about 3 wt%, based on 100 wt% of the positive electrode active material layer, and a content of the conductive material may be in a range of from about 0.1 wt% to about 5 wt%, or about 0.5 wt% to about 3 wt%, based on 100 wt% of the positive electrode active material layer.

For example, when the electrode is a negative electrode, the electrode active material layer may be or include a negative electrode active material layer, and the electrode active material may be a negative electrode active material.

The negative electrode active material includes at least one of a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative electrode active material.

The carbon-based negative electrode active material may include at least one of crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like. The soft carbon refers to a carbon material that can be graphitized, and is a material that is readily graphitized by heat treatment at a high temperature, for example, about 2800 °C. The hard carbon is a carbon material that cannot be graphitized, or is finely graphitized by heat treatment.

The negative electrode active material layer may further include other types of negative electrode active materials in addition to the carbon-based negative electrode active material, and may further include, for example, at least one of a lithium metal, an alloy of lithium metal, and a material capable of doping and dedoping lithium.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes at least one of alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

The negative electrode active material layer may optionally further include at least one of a binder, a conductive material, or a combination thereof, together with the negative electrode active material.

The binder is configured to adhere the negative electrode active material particles to each other, and to adhere the negative electrode active material to the current collector. The binder may be or include at least one of a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and included. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change to the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode active material may be included in an amount in a range of from about 90 wt% to about 99.8 wt%, or about 94 wt% to about 99 wt%, based on 100 wt% of the negative electrode active material layer, the binder may be included in an amount in a range of from about 0.1 wt% to about 5 wt%, or about 0.5 wt% to about 3 wt%, based on 100 wt% of the negative electrode active material layer, and the conductive material may be included in an amount in a range of from about 0.1 wt% to about 5 wt%, or about 0.5 wt% to about 3 wt%, based on 100 wt% of the negative electrode active material layer.

### Others

The electrode may further include an insulating layer on an uncoated portion where the electrode active material layer is not coated on the electrode current collector, e.g., on an uncoated portion.

The insulating layer may include inorganic particles. The insulating layer is a layer that is configured to perform an insulating function, and the insulating layer may optionally further include a flame retardant in addition to inorganic particles. When a flame retardant is included in the insulating layer, the thermal safety and fire safety of the rechargeable lithium battery can be further improved.

The inorganic particles may include, for example, at least one of aluminum oxide, silicon dioxide, magnesium oxide, titanium dioxide, hafnium oxide, tin oxide, cerium oxide, nickel oxide, zinc oxide, calcium oxide, zirconium oxide, yttrium oxide, silicon carbide, boehmite (AlO(OH)), or a combination thereof.

An average particle diameter (D₅₀) of the inorganic particles may be in a range of from about 0.1 µm to about 20 µm, for example about 0.1 µm to about 10 µm, about 0.1 µm to about 5 µm, and for example greater than about 2 µm, for example about 2.1 µm to about 5 µm. By adjusting the size of the inorganic particles as desired, the adhesive strength and heat resistance of the insulating layer may be improved.

The inorganic particles may be included in an amount in a range of from about 50 wt% to about 99.9 wt%, for example, about 65 wt% to about 99 wt%, about 70 wt% to about 98 wt%, about 80 wt% to about 97 wt%, or about 90 wt% to about 96 wt% based on 100 wt% of the insulating layer. When the content of inorganic particles satisfies the above range, the insulating layer may achieve desired or improved insulating performance, heat resistance, and fire safety.

The above flame retardant may include at least one of a phosphorus-based flame retardant, a silicon-based flame retardant, a nitrogen-based flame retardant, a sulfur-based flame retardant, a boron-based flame retardant, a halogenated flame retardant, an inorganic oxide or hydroxide flame retardant, or a combination thereof.

The phosphorus-based flame retardant is not particularly limited as long as the phosphorus-based flame retardant is a type generally included in industry, and may include, for example, at least one of phosphate, phosphite, phosphonate, phosphinate, phosphine oxide, phosphazene, or a combination thereof. For example, phosphazene may be included.

The phosphorus-based flame retardant includes an organic functional group such as at least one of an alkyl group, an aryl group, an alkenyl group, and the like, and the organic functional group may be substituted with a halogen group, an amine group, a hydroxyl group, a thiol group, and the like. Herein, the alkyl group may be or include an alkyl group having 1 to 20 carbon atoms, the aryl group may be an aryl group having 6 to 20 carbon atoms, and the alkenyl group may be an alkenyl group having 2 to 20 carbon atoms. The phosphate may be or include, for example, at least one of a trialkyl phosphate, an alkyldiaryl phosphate, a triaryl phosphate, an ammonium polyphosphate, and the like, and the phosphinate may be a metal dialkyl phosphinate.

As an example, the phosphorus-based flame retardant may include at least one of ammonium phosphate, ammonium polyphosphate, trimethyl phosphate, triethyl phosphate, tripropyl phosphate, tripentyl phosphate, tris(2-ethylhexyl) phosphate, trioctyl phosphate, tris(2-butoxyethyl) phosphate, tris(2-chloroethyl) phosphate, tris(1-chloro-2-propyl) phosphate, tris(2-chloropropyl) phosphate, tris(3-chloropropyl) phosphate, tris(1,3-dichloro-2-propyl) phosphate, tris(2,3-dibromopropyl) phosphate, tris(tribromoneopentyl) phosphate, a trimethylpropane methylphosphonic oligomer, pentaerythritol phosphate, cyclic neopentyl thiophosphoric acid anhydride, 2-ethylhexyl diphenyl phosphate, isodecyl diphenyl phosphate, cresyl diphenyl phosphate, triphenyl phosphate, tricresyl phosphate, tert-butylphenyl diphenyl phosphate, tris(2,4-dibromophenyl) phosphate, N,N'-bis(2-hydroxyethyl)aminomethyl phosphate, resorcinol bis(diphenyl phosphate), bisphenol A bis(diphenyl phosphate), tetraphenyl m-p-phenylene diphosphate, tetrakis(2-chloroethyl)dichloroisopentyl diphosphate, dimethyl propane phosphonate, dimethyl methane phosphonate, diethyl ethane phosphonate, diethyl hydroxymethane phosphonate, aluminum diethyl phosphinate, zinc diethyl phosphinate, aluminum dipropyl phosphinate, aluminum 2-carboxyethyl phenyl phosphinate, phosphazene, or a combination thereof. When using the phosphorus-based flame retardant, desired or improved flame retardancy and thermal stability, a high melting point, and low volatility may be achieved, so even when applied to resin, the phosphorus-based flame retardant does not deteriorate the inherent properties of the resin.

The nitrogen-based flame retardant is not particularly limited as long as the nitrogen-based flame retardant is a type generally included in industry, and may include, for example, at least one of melamine cyanurate, melamine phosphate, melamine polyphosphate, melamine pyrophosphate, melamine ammonium polyphosphate, melamine ammonium pyrophosphate, melamine borate, melamine sulfate, or a combination thereof.

The sulfur-based flame retardant is not particularly limited as long as the sulfur-based flame retardant is a type generally included in industry, and may include, for example, at least one of alkylbenzenesulfonic acid, alkylsulfonic acid, naphthelanesulfonic acid, or a combination thereof.

The boron-based flame retardant is not particularly limited as long as the boron-based flame retardant is of a type generally included in industry, and may include, for example, at least one of zinc borate, zinc metaborate, barium metaborate, or a combination thereof.

The halogenated flame retardant is not particularly limited as long as the halogenated flame retardant is a type generally included in industry, and may include, for example, at least one of hexabromobenzene, hexabromobiphenyl ether, tribromophenol, decabromodiphenyl ether, halogenated polycarbonate, halogenated polystyrene, halogenated polyolefin, or a combination thereof.

The inorganic oxide or hydroxide flame retardant is not particularly limited as long as the inorganic oxide or hydroxide flame retardant is a type generally included in industry, and may include, for example, at least one of aluminum oxide, magnesium oxide, magnesium hydroxide, zinc oxide, titanium oxide, silicon oxide, ammonium hydroxide, or a combination thereof.

The flame retardant may be included in an amount in a range of from about 0.1 wt% to about 50 wt%, for example, about 1 wt% to about 45 wt%, about 2 wt% to about 40 wt%, about 5 wt% to about 35 wt%, about 10 wt% to about 30 wt%, or about 20 wt% to about 30 wt% based on 100 wt% of the insulation layer. When the flame retardant content satisfies the above range, the overall heat generation is reduced when a short circuit occurs, thereby ensuring or improving safety and reliability.

Furthermore, the insulating layer may further include a binder. The binder can be configured to attach materials within the insulating layer to each other, and to adhere the insulating layer to the electrode current collector.

The binder may be or include at least one of an insoluble binder, a watersoluble binder, or a combination thereof. The example details of the above binder are as described above.

The binder may be included in an amount in a range of from about 0.1 wt% to about 15 wt%, for example, about 4 wt% to about 11 wt% based on 100 wt% of the insulating layer.

A thickness of the insulating layer may be in a range of from about 1 µm to about 20 µm, for example about 3 µm to about 18 µm, about 5 µm to about 16 µm, about 10 µm to about 15 µm, or about 12 µm to about 15 µm. In this case, the insulating layer can sufficiently contribute to the insulating effect during operation of the rechargeable lithium battery.

An area of the insulating layer may be small compared to an area of the electrode current collector, and for example, the ratio of the area of the insulating layer to the area of the electrode current collector may be in a range of from about 0.01 to about 0.3, or about 0.1 to about 0.2.

For example, the insulating layer and the coating layer may be spaced apart from each other, or may be in contact with each other. Similarly, the insulating layer and the electrode active material layer may be spaced apart from each other, or may be in contact with each other. When each layer is in contact with another, the components of each layer may be mixed at the interface, creating a mixed region. When the insulating layer and each layer are separated, a separation distance between the insulating layer and the coating layer may be shorter than a separation distance between the insulating layer and the electrode active material layer.

### Rechargeable Lithium Battery

A rechargeable lithium battery according to some example embodiments includes a positive electrode, a negative electrode, and an electrolyte. At least one of the positive electrode and negative electrode is the above-described electrode. Either one the positive electrode and negative electrode may be the electrodes described above, or both the positive electrode and negative electrode may be the electrodes described above.

When the positive electrode is the aforementioned electrode, the positive electrode includes a positive electrode current collector, a positive electrode active material layer located on the positive electrode current collector and including a positive electrode active material, and a coating layer located at an edge of the positive electrode active material layer, wherein the coating layer includes an impact modifier. In addition, when the negative electrode is the aforementioned electrode, the negative electrode includes the negative electrode current collector, a negative electrode active material layer located on the negative electrode current collector and including a negative electrode active material, and a coating layer located at a negative end of the negative electrode active material layer, and the coating layer includes an impact modifier.

Any duplicated content in the electrodes described above is omitted from the below description.

### Electrolyte

For example, the electrolyte for a rechargeable lithium battery may be or include an electrolyte solution, which includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be included alone or in a mixture of two or more types of solvents.

When using a carbonate-based solvent, a cyclic carbonate and a chain carbonate may be mixed, and the cyclic carbonate and the chain carbonate may be mixed in a volume ratio in a range of from about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), lithium difluorobis(oxalato) borate (LiDFOB), and lithium bis(oxalato) borate (LiBOB).

### Separator

Depending on the type of rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON^{®}), or a copolymer or mixture of two or more thereof.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

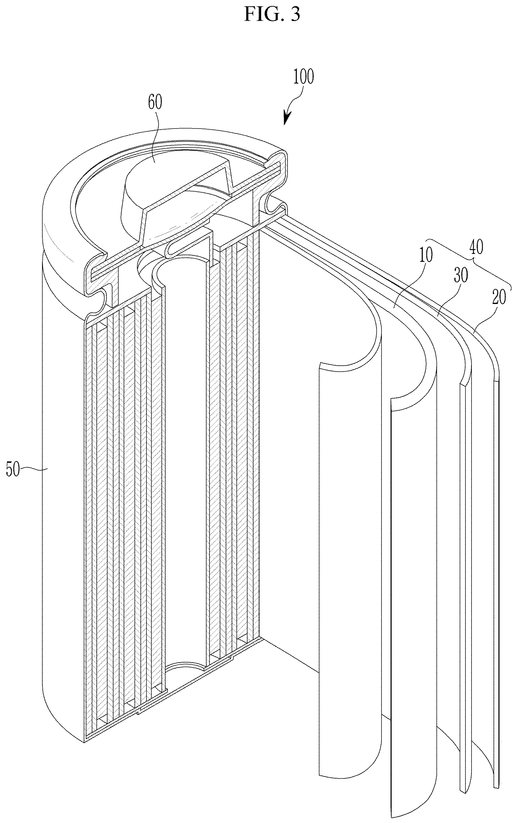

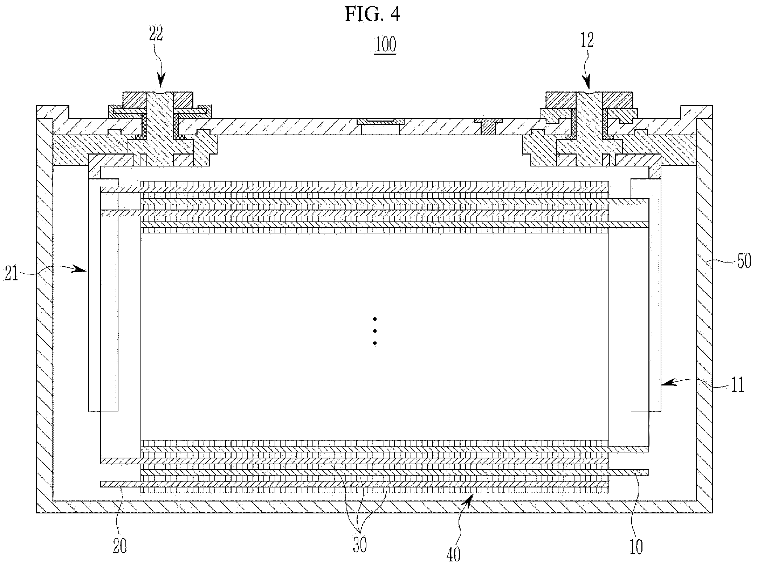

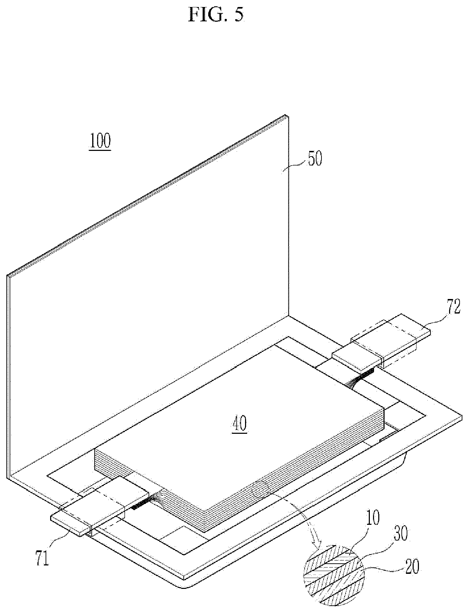

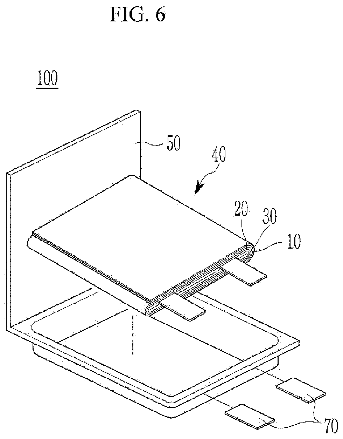

The rechargeable lithium battery may be classified into cylindrical, prismatic, pouch, coin, and the like, depending on the shape thereof. FIGS. 3 to 6 are schematic diagrams illustrating the rechargeable lithium battery according to some example embodiments, where FIG. 3 is a cylindrical battery, FIG. 4 is a prismatic battery, and FIGS. 5 and 6 are a pouch-shaped battery. Referring to FIGS. 3 to 6, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 3. Additionally, in FIG. 4, the rechargeable lithium battery 100 may include a positive electrode lead tab 11, a positive electrode terminal 12, a negative lead tab 21, and a negative electrode terminal 22. As shown in FIGS. 5 and 6, the rechargeable lithium battery 100 includes an electrode tab 70 illustrated in FIG. 6, or a positive electrode tab 71 and a negative electrode tab 72 illustrated in FIG. 5, the electrode tabs 70/71/72 forming an electrical path for inducing the current formed in the electrode assembly 40 to the outside of the rechargeable lithium battery 100.

Examples and comparative examples of the present disclosure are described below. However, the following examples are only examples of the present disclosure, and the present disclosure is not limited to the following examples.

### Example 1

### (1) Manufacturing of Electrodes

Artificial graphite (AGP-2L-P, BTR New Material Group Co., Ltd.) as a negative electrode active material, styrene-butadiene rubber (HCM-815, HansolChemical) as a binder, and a conductive material (Litx35, DenkaKorea Co., Ltd.) were mixed in a weight ratio of 97:2:1 (negative electrode active material:binder:conductive material) to prepare a negative electrode active material composition. This composition was dispersed in water as a solvent to prepare a negative electrode active material slurry.

Artificial graphite (AGP-2L-P, BTR New Material Group Co., Ltd.) as a negative electrode active material, a methacrylate-butadiene-styrene copolymer (MBS) having an average particle diameter (D₅₀) of about 250 nm (MB838A, LG Chem.) as an impact modifier, a styrene-butadiene rubber (HCM-815, HansolChemical) as a binder were mixed in a weight ratio of 40:50:10 (negative electrode active material:impact modifier :binder) to prepare a composition for a coating layer. This composition was dispersed in water as a solvent to prepare a coating layer slurry.

The negative electrode active material slurry was coated on a copper thin film and dried to form a negative electrode active material layer, and at the edges of the negative electrode active material layer, the coating layer slurry was coated and then, dried and compressed to form a coating layer.

Herein, an area of the coating layer was 10% based on a total area of the electrode active material layer, and an area of the coating layer on an uncoated portion where the negative electrode active material layer was not coated was 20% based on the total area of the coating layer. The negative electrode active material layer has a thickness of 200 µm, and the coating layer had a width of 5 mm and a thickness of about 15 µm.

### (2) Manufacturing of Rechargeable Lithium Battery Cells

LiNi_{0.94}Co_{0.04}Al_{0.1}Mn_{0.01}O₂ as a positive electrode active material, polyvinylidene fluoride as a binder, and carbon nanotube as a conductive material were mixed in a weight ratio of 96:2:2 (positive electrode active material:binder:conductive material) to prepare a positive electrode active material composition. This positive electrode active material composition was dispersed in an N-methyl pyrrolidone solvent to prepare a positive electrode active material slurry. This slurry was coated on a 12 µm-thick aluminum foil and then, dried and compressed to manufacture a positive electrode.

An electrode assembly was manufactured by interposing a 10 µm-thick polyethylene separator between the positive electrode and the negative electrode and then, inserted into a case, and an electrolyte was injected to manufacture a rechargeable lithium battery cell. The electrolyte was prepared by mixing EC (ethylene carbonate):EMC (ethylmethyl carbonate):DMC (dimethyl carbonate) in a volume ratio of 2:4:4 and dissolving 1.15 M LiPF₆ in the mixed solvent.

### Comparative Example 1

A negative electrode and a rechargeable lithium battery cell were manufactured in the same manner as in Example 1 except that the coating layer was not formed in the manufacture of the negative electrode of Example 1.

### Evaluation Example 1: Electrode Analysis

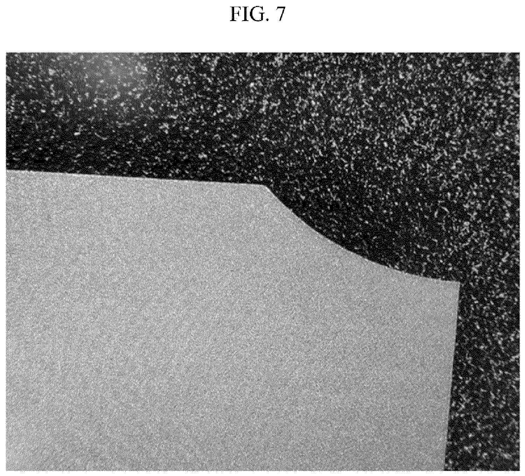

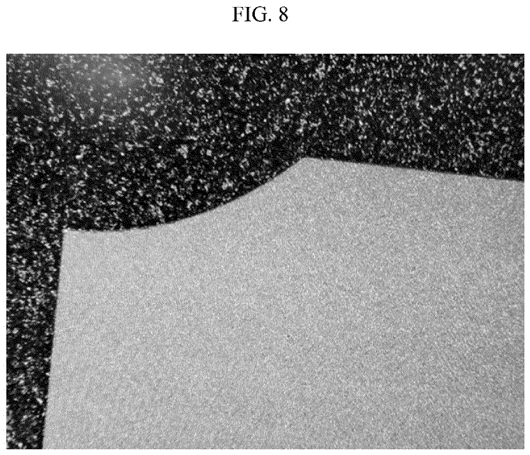

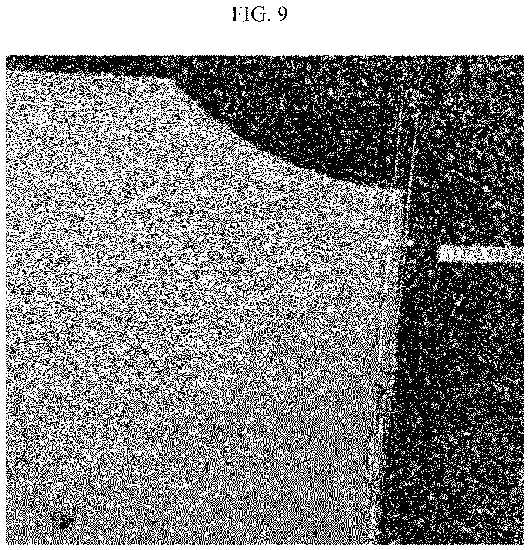

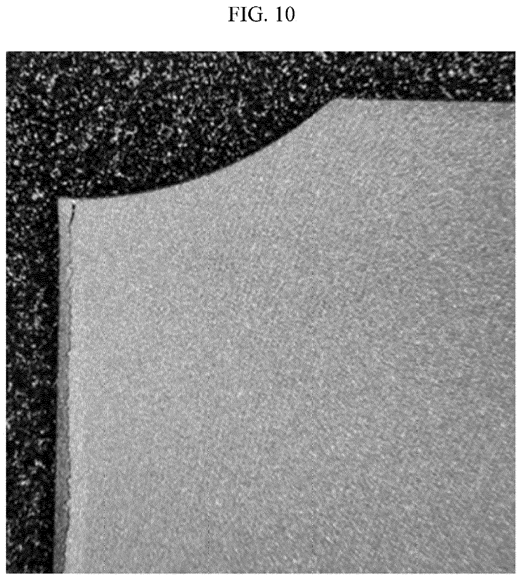

Images of terminal ends of the negative electrodes of Example 1 and Comparative Example 1 were taken with an electron microscope. The terminal ends of the negative electrodes refer to two edges adjacent to tabs among the four edges of the negative electrodes. FIGS. 7 to 10 are scanning electron microscope (SEM) images showing the terminal ends of each negative electrode of Example 1 and Comparative Example 1. Referring to FIGS. 7 and 8, the terminal ends of the negative electrode of Example 1, where the coating layer was formed at the edges of the negative electrode active material layer, were neither cracked nor detached, and referring to FIGS. 9 and 10, the terminal ends of the negative electrode of Comparative Example 1, where the coating layer was not formed, were cracked and detached.

While this disclosure has been described in connection with what is presently considered to be practical example embodiments, it is to be understood that the disclosure is not limited to the disclosed embodiments, but, on the contrary, is intended to cover various modifications and equivalent arrangements included within the scope of the appended claims.

### Description of Symbols

| | | | |
|---|---|---|---|
| 1: | electrode current collector | 2: | electrode active material layer |
| 3: | coating layer | 100: | rechargeable lithium battery |
| 10: | positive electrode | 11: | positive electrode lead tab |
| 12: | positive electrode terminal | 20: | negative electrode |
| 21: | negative electrode lead tab | 22: | negative electrode terminal |
| 30: | separator | 40: | electrode assembly |
| 50: | case | 60: | sealing member |
| 70: | electrode tab | 71: | positive electrode tab |
| 72: | negative electrode tab | | |

## Claims

1. An electrode for a rechargeable lithium battery, the electrode comprising:
an electrode current collector;
an electrode active material layer on the electrode current collector; and
a coating layer at an edge of the electrode active material layer;
wherein the coating layer comprises an impact modifier.

2. The electrode as claimed in claim 1, wherein an area of the coating layer at the edge of the electrode active material layer is less than or equal to about 10% of an entire area of the electrode active material layer.

3. The electrode as claimed in claim 1 or 2, wherein the coating layer is located on an uncoated portion of the electrode current collector, which is an area where the electrode active material layer is not coated, together with the edge of the electrode active material layer.

4. The electrode as claimed in claim 3, wherein an area of the coating layer located on the uncoated portion is in a range of from about 0% to about 50% of a total area of the coating layer.

5. The electrode as claimed in any one of claims 1 to 4, wherein the impact modifier comprises at least one of a methacrylate-butadiene-styrene copolymer (MBS), an acrylic impact modifier (AIM), an acrylonitrile-butadiene-styrene copolymer (ABS), a methacrylate-acrylonitrile-butadiene-styrene copolymer (MABS), an ethylene-vinyl acetate copolymer (EVA), a chlorinated polyethylene (CPE, chlorinated PE), an acrylic-grafted chlorinated polyethylene, and an acrylic-grafted polyvinyl chloride (acrylic-grafted PVC).

6. The electrode as claimed in any one of claims 1 to 5, wherein the impact modifier is in a particle form.

7. The electrode as claimed in claim 6, wherein an average particle diameter (D₅₀) of the impact modifier is in a range of from about 100 nm to about 500 nm.

8. The electrode as claimed in any one of claims 1 to 7, wherein the impact modifier is included in an amount in a range of from about 20 wt% to about 80 wt% based on 100 wt% of the coating layer.

9. The electrode as claimed in any one of claims 1 to 8, wherein:
the coating layer further comprises a binder, and
the binder comprises a polymer including at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, and nylon.

10. The electrode as claimed in any one of claims 1 to 9, wherein the coating layer further comprises at least one of an electrode active material and a conductive material.

11. The electrode as claimed in any one of claims 1 to 10, wherein a thickness of the coating layer is in a range of from about 1 µm to about 50 µm.

12. The electrode as claimed in any one of claims 1 to 11, wherein:
the electrode further comprises an insulating layer located on the uncoated portion where the electrode active material layer is not coated on the electrode current collector, and
the insulating layer comprises inorganic particles and a flame retardant.

13. The electrode as claimed in claim 12, wherein the insulating layer and the coating layer are spaced apart from each other; or wherein the insulating layer and the coating layer are in contact with each other.

14. The electrode as claimed in any one of claims 1 to 13, wherein:
when the electrode is a positive electrode, the electrode active material layer is a positive electrode active material layer, and the electrode active material layer comprises a lithium transition metal composite oxide; and
when the electrode is a negative electrode, the electrode active material layer is a negative electrode active material layer, and the electrode active material layer comprises a carbon-based negative electrode active material.

15. A rechargeable lithium battery, comprising
a positive electrode, a negative electrode, and an electrolyte,
wherein at least one of the positive electrode and the negative electrode comprises the electrode as claimed in any one of claims 1 to 14.
